# EUROPEAN PATENT APPLICATION

(11) **EP 0 829 813 A1**
(43) Date of publication of application: **18.03.1998**
(21) Application number: 96907725.4
(22) Date of filing: 29.03.1996
(51) Int. Cl.: G06F 17/60

(54) **CREDIT CARD SYSTEM AND UTILIZATION METHOD OF CREDIT CARD USING THE SYSTEM**

(30) Priority: 02.05.1995 JP 131206/95
(71) Applicant: Nippon Shinpan Co. Ltd., Bunkyo-ku, Tokyo 113 (JP)
(72) Inventor: MASUDA, Hidehiro, Nippon Shinpan Co., Ltd., Tokyo 113 (JP)
(74) Representative: Bruder, Michel
(86) International application number: PCT/JP96/00865
(87) International publication number: WO 96/35185

(57) **Abstract**

The present invention is to provide a credit card system which allows a retail store to issue a credit card to a customer immediately upon application, permits the customer to use the issued credit card continuously, and assures highly safe credit sale with the issued credit card.

A credit card system has a communication device for communicating with the second system, a card reader for reading the identification information and the management information recorded on the credit card, a decision means for determining whether the credit card can be used or not, judgment means for judging whether usability of the credit card is to be determined by its own system or the second system based on the management information recorded on the credit card, and the system indicates or displays resultant data as to whether the credit card can be used or not as determined by its own system if usability of the credit card is to be determined by its own system, and inquires the second system about usability of the credit card if usability of the credit card is to be determined by the second system, and indicates or displays resultant data as to whether the credit card can be used or not as determined by the second system.

## Description

### Field of the Invention:

The present invention relates to a credit card system for using credit cards in selling goods and services (hereinafter collectively referred to as "goods") and a method of using credit cards with such a credit card system, and more particularly to a system for issuing credit cards to customers with ease.

### Background of invention:

At present, it is very popular for customers to pay for goods with credit cards. According to a conventional credit card issuing process, a customer needs to have a credit card before he buys goods on credit. Specifically, the customer sends an filled-out application form to a credit company either directly or via a retail store, and the credit company then checks the application. The credit company usually sets a limit amount of money for the customer, and issues a credit card with information about the limit amount of money to the customer. After having received the credit card, the customer can purchase goods with the credit card simply by signing a slip insofar as the amount of money which the customer is going to pay for the purchased goods is less than the limit amount of money. The customer is not required to apply for the issuance of a credit card each time he buys individual goods, and the retail store where the user buys goods only needs to go through a simple procedure for checking the limit amount of money set for the user and the history of past payments by the user for the goods purchased on credit.

According to the above conventional credit card issuing process, the credit company conducts a detailed creditability examination before issuing the credit card to the customer, then makes a member master file of the customer in its credit card management system, and registers the customer's name, address, creditability information, and the limit amount of money among other information. Such a member master file is usually produced by a batch process that is carried out at certain intervals of time. Therefore, it takes a certain period of time until a member master file is completed. Another problem is that it takes many days for a customer to receive a credit card that has been applied for because of the time required for the credit company to produce the credit card and the time required for the credit company to mail the credit card to the customer.

Attempts have been made to issue a credit card to a customer immediately on site. However, because no sufficient credit sale management is available for the customer before his member master file is created in the credit company, such an approach is subject to a risk in credit sale and poses problems especially when selling goods costing a large amount of money or selling goods repeatedly on credit. One solution would be to immediately register the customer information in the member master file, but would be difficult to adopt as it would necessitate extensive modifications and adjustments of the credit card management system and its operation rules. Efforts have also been made to give a customer a temporary credit card on site. However, such a temporary credit card has only permitted the customer to purchase goods on credit for a relatively small amount of money on a temporary basis in order to avoid a risk in credit sale.

As described above, the conventional credit card issuing process has been disadvantageous in that it is time-consuming to create a member master file and it takes many days until a credit card is actually available to a customer, and has posed limitations on the immediate issuance of a credit card to a customer who wishes to buy goods on credit.

It is therefore an object of the present invention to provide a credit card system which allows a retail store or a credit company to issue a credit card to a customer immediately upon application, permits the customer to use the issued credit card continuously, and assures highly safe credit sale with the issued credit card.

### Disclosure of the Invention:

To achieve the above object, as described in claims, there is provided in accordance with the present invention

A credit card system comprising:
a communication means for communicating with a second system for determining whether the credit card can be used or not;
a reader means for reading at least identification information and management information recorded on the credit card;
a decision means for determining whether the credit card can be used or not;
a judgment means for judging whether usability of the credit card is to be determined by its own system or said second system based on the management information recorded on the credit card; and
a means for indicating or displaying resultant data as to whether the credit card can be used or not as determined by said decision means if said judgment means judges that usability of the credit card is to be determined by its own system; and for inquiring said second system about usability of the credit card through said communication means if said judgment means judges that usability of the credit card is to be determined by said second system, and indicating or displaying resultant data as to whether the credit card can be used or not as determined by said second system,
and said credit card system, wherein said management information comprises term or date information recorded on the credit card, and wherein said management information comprises limit amount information recorded on the credit card.

A credit card system comprising:
a communication means for communicating with a second system for determining whether the credit card can be used or not;
a reader means for reading at least the identification information recorded on the credit card;
a memory means for storing management information of each credit card;
a decision means for determining whether the credit card can be used or not;
a judgment means for judging whether usability of the credit card is to be determined by its own system or said second system based on the management information stored in said memory means,
a means for indicating or displaying resultant data as to whether the credit card can be used or not as determined by said decision means if said judgment means judges that usability of the credit card is to be determined by its own system; and for inquiring said second system about usability of the credit card if said judgment means judges that usability of the credit card is to be determined by said second system, and indicating or displaying resultant data as to whether the credit card can be used or not as determined by said second system,
and said credit card system, wherein said management information comprises term or date information recorded on the credit card, and wherein said management information comprises limit amount information recorded on the credit card.

A credit card system comprising:
a communication means for communicating with a second system `which manages the information to determine whether the credit card can be used or not;
a reader means for reading at least the identification information recorded on the credit card;
a decision means for determining whether the credit card can be used or not;
an inquiry means for inquiring said second system about usability of the credit card;
a judgment means for judging whether usability of the credit card is to be determined by its own system or not based on the decision by said second system; and
a means for indicating or displaying resultant data as to whether the credit card can be used or not as determined by said decision means of its own system if said judgment means judges on the basis of the answer from said second system that usability of the credit card is to be determined by its own system after said inquiry means inquires said second system about usability of the credit card; and for indicating or displaying resultant data as to whether the credit card can be used or not as determined by said second system if said judgment means judges that usability of the credit card should not be determined by its own system.

A method of using a credit card with a credit card system, said credit card system comprising a first system for primarily managing justifiability of a credit card, a second system for primarily managing credit information of a customer, and a credit card having storage means for storing at least identification information and management information therein, said first system comprising communication means for communicating with said second system, reader means for reading the identification information and the management information stored in the storage means of the credit card, decision means for determining whether the credit card can be used or not, and judgment means for judging whether usability of the credit card is to be determined by said first system or not based on the management information stored in the storage means of the credit card, said method comprising the steps of:
indicating or displaying resultant data as to whether the credit card can be used or not as determined by said decision means if said judgment means judges that usability of the credit card is to be determined by said first system; and
inquiring said second system about usability of the credit card through said communication means if said judgment means judges that usability of the credit card is to be determined by said second system, and indicating or displaying resultant data as to whether the credit card can be used or not as determined by said second system.

A method of using a credit card with a credit card system, said credit card system comprising a first system for primarily managing justifiability of a credit card, a second system for primarily managing credit information of a customer, and a credit card having storage means for storing at least identification information therein, said first system comprising communication means for communicating with said second system, reader means for reading the identification information stored in the storage means of the credit card, memory means for storing management information of the credit card, decision means for determining whether the credit card can be used or not, and judgment means for judging whether usability of the credit card is to be determined by said first system or not based on the management information stored in the storage means of the credit card, said method comprising the steps of:
indicating or displaying resultant data as to whether the credit card can be used or not as determined by said decision means if said judgment means judges that usability of the credit card is to be determined by said first system; and
inquiring said second system about usability of the credit card if said judgment means judges that usability of the credit card is to be determined by said second system, and indicating or displaying resultant data as to whether the credit card can be used or not as determined by said second system.

A method of using a credit card with a credit card system comprising a communication means for communicating with a second system which manages the information to determine whether the credit card can be used or not, reader means for reading at least the identification information recorded on the credit card, decision means for determining whether the credit card can be used or not, inquiry means for inquiring said second system about usability of the credit card, and judgment means for judging whether usability of the credit card is to be determined by its own system or not based on the decision by said second system, said method comprising the steps of:
indicating or displaying resultant data as to whether the credit card can be used or not as determined by said decision means if said judgment means judges on the basis of the answer from said second system that usability of the credit card is to be determined by its own system after said inquiry means inquires said second system about usability of the credit card; and
indicating or displaying resultant data as to whether the credit card can be used or not as determined by said second system if said judgment means judges that usability of the credit card should not be determined by its own system.

And according to above mentioned credit card system, wherein said credit card and/or said self system has a limit amount column for recording a limit amount of money, further comprising means for updating the limit amount of money recorded in said limit amount column as the credit card is used, said decision means comprising means for determining whether the credit card can be used or not based on resultant data produced by comparison between the limit amount of money recorded in said limit amount column and an amount of money proposed to pay with the credit card.

A method according to above mentioned methods, wherein said credit card and/or said first system has a limit amount column for recording a limit amount of money, further comprising means for updating the limit amount of money recorded in said limit amount column as the credit card is used, said method further comprising the step of determining whether the credit card can be used or not based on resultant data produced by comparison between the limit amount of money recorded in said limit amount column and an amount of money proposed to pay with the credit card.

According to one basic aspect of the present invention, in the first system which manages justifiability of the credit card, the judgment means judges whether usability of the credit card is to be determined by the first system or the second system based on the management information stored in the memory means of the first system or the credit card. If the judgment means judges that usability of the credit card is to be determined by the first system, then the decision means determines whether the credit card can be used or not, and resultant data are indicated or displayed. If the judgment means judges that usability of the credit card is to be determined by the second system, then the second system is inquired about usability of the credit card through the communication means, and resultant data as to whether the credit card can be used or not as determined by the second system are indicated or displayed.

According to another basic aspect of the present invention, the inquiry means of the first system inquires the second system about usability of the credit card through the communication means. If the first system is to determine whether the credit card can be used or not as judged by the judgment means depending on the answer from the second system, the decision means of the first system determines whether the credit card can be used or not, and resultant data are indicated or displayed. If the first system is not to determine whether the credit card can be used or not as judged by the judgment means depending on the answer from the second system, then the second system determines whether the credit card can be used or not, and resultant data are indicated or displayed.

### Brief Description of the Drawings:

FIG.1 is a block diagram to explain a credit card system according to an embodiment of the present invention;
FIG.2 is an example view of a credit card used in an embodiment of the present invention;
FIG.3 is a flowchart of an embodiment of the present invention;
FIG.4 is a flowchart of another embodiment of the present invention;
FIG.5 is a diagram showing a member master file used in a second system of the present invention.

### The Preferred Embodiment of the Present Invention:

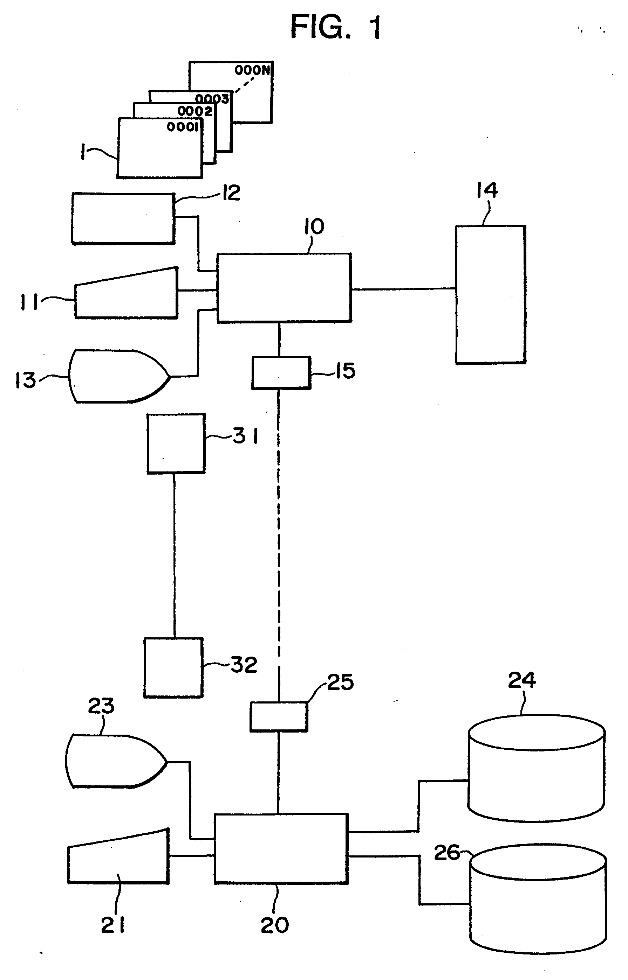

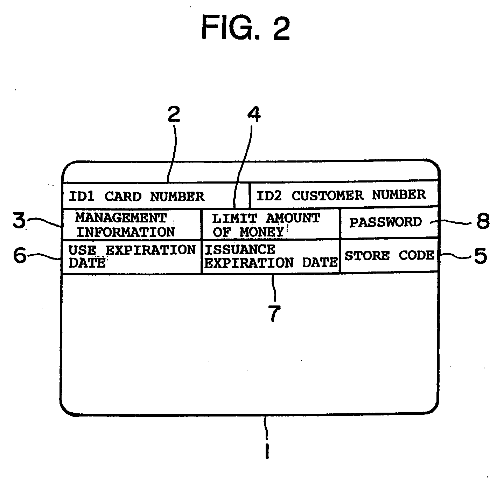

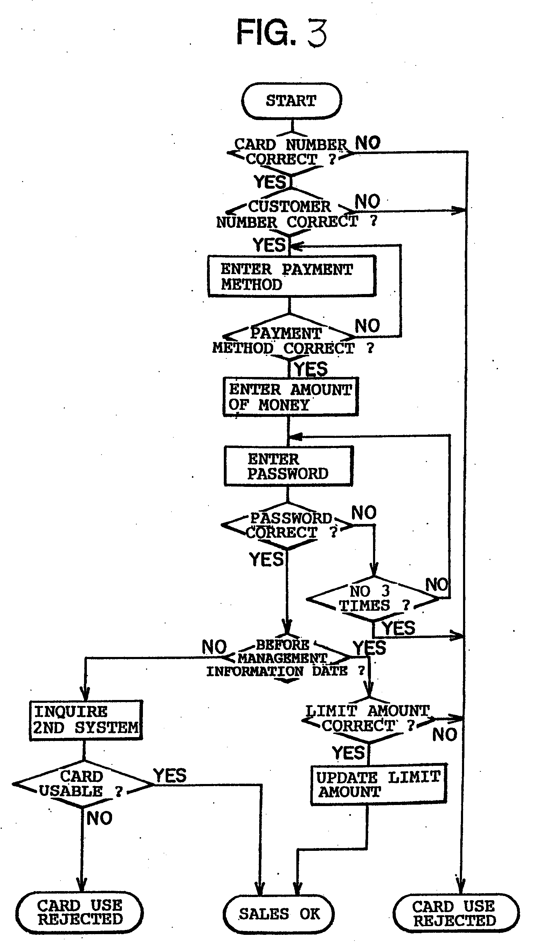

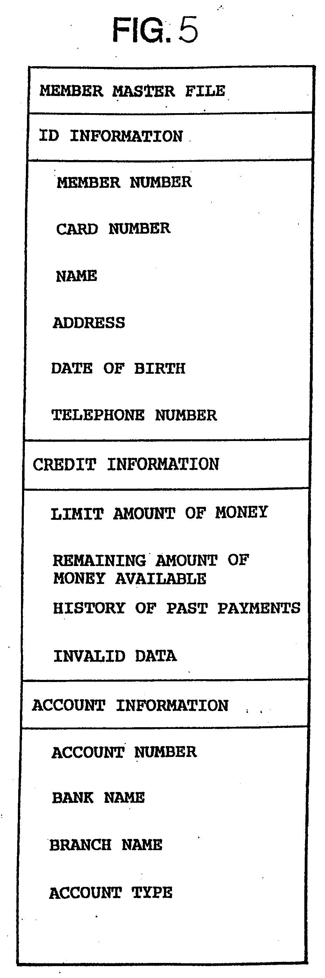

FIGS.1-3, and 5 show a credit card system and a method of using credit card with this credit card system according to the present invention, and FIG.1 is a general view of the first system and the second system of the credit card system, FIG.2 is a view of a credit card used in the credit card system, FIG.3 is a flowchart of a processing sequence of the credit card system according to this embodiment, and FIG.5 is a diagram showing a member master file used in a second system of the credit card system according to this embodiment.

In the drawings, number 1 indicates a credit card, 2 indicates an identification information column, 3 indicates a management information column, 4 indicates a limit amount column, 5 indicates a store code column, 6 indicates a use expiration date column, 7 indicates an issuance expiration date column, 8 indicates a password column, 10 indicates a first system processor, 11 indicates a keyboard, 12 indicates a reader/writer of the credit card, 13 indicates a display unit, 14 indicates a memory unit, 15 indicates a communication adapter, 20 `indicates a second system processor, 21 indicates a keyboard, 23 indicates a display unit, 24 and 26 indicates memory units, 25 indicates a communication adapter.

In this embodiment, a first system is installed in a retail store which gives credit at selling and a second system is a large system installed in a credit company which manages the credit information.

The credit cards 1 to be issued by the credit card system are prepared in the retail store. A different identification information, e.g., numbers from 0001 to 000N, for the respective credit card is registered in the first identification information column (credit card number column) of the credit card. In the illustrated credit card system, the credit cards comprises IC (Integrated Circuit) credit cards, and the identification information and other information are recorded in a certain area on the memory of the IC credit card. In this embodiment, a date or term information as the management information of the credit card is recorded in the column 3, and a limit amount of money is in the column 4, as well as a store code, a use expiration date, and an issuance expiration date are recorded in the columns 5, 6, and 7 respectively. The column 8 is a column where the password number is recorded when the credit card is issued.

When a customer desires the purchase of goods on credit in a retail store, the person in charge in the retail store obtains information such as the name, sex, date of birth, etc. of the customer, assigns a credit card of a certain identification number, e.g., 0001, recorded thereon, to the customer, and inquires the second system about the credibility of the customer notifying the identification number of the credit card. The inquiry may be made on-line through the communication adapters 15, 25 or off-line through the facsimile devices 31, 32 or telephone.

In response to the inquiry, the second system searches files stored in the memory units 24 and 26 for the credibility of the customer. If the customer has a good credibility and the credit sales is allowable, then the second system notifies the first system that it permits the issuance of the credit card through the communication means as mentioned above. The second system then starts to prepare for the registration of the member master file.

On the side of the first system, the person in charge in the retail store receives the notification and inserts the credit card to be issued into the reader/writer 12. The first system checks the issuance expiration date, and the store code of the credit card, and requires the person in charge to enter the password number of the customer. When the person in charge enters it, the first system records a certain date ahead of the date of issuance, e.g., a date two weeks ahead of the date of issuance, in the management information column of the credit card and also records a use expiration date in the use expiration date column 6 of the credit card. Thus the first system allows the issuance of the credit card. Otherwise the first system may record a numerical value representing an infinite period. Alternatively, the credit card may dispense with the expiration date column 6 so that the credit card can be used infinitely. The information to be recorded in the management information column is set so that the determination whether the credit card can be used or not can be made on the side of the first system during the period when the registration of the member master file is incomplete on the side of the second system. Therefore, the contents of such management information may be selected as desired. For example, the management information may be the date of issuance of the credit card, and the first system may judge on the basis of the elapsed time from the date of issuance to the date of use. Alternatively, rather than term or date information, the information showing the limit amount of money assigned to the credit card may be employed as the management information. The first system may determine whether or not the payment the customer wishes to make with the credit card exceeds the limit amount of money recorded on the credit card, and may use the resulting data for inquiry to the second system as illustrated later.

When the customer purchases goods with the credit card, the customer asks the retail store with the credit card to buy goods on credit. The person in charge in the retail store inserts the credit card into the reader/writer 12 of the first system. The first system processor 10 checks the identification number of the credit card, the identification number of the customer, the use expiration date, and others such as the store code. Then, the first system processor 10 checks the numerical value recorded in the management information column 3. In the illustrated embodiment, since the date two weeks ahead of the date of issuance is recorded in the management information column 3, the first system processor determines whether the date of use is prior to the recorded date or not. If the date of use is prior to the recorded date, then the first system processor 10 immediately displays a prompt on the display unit 13 to enter the amount of money to be paid with the credit card. When the person in charge enters the amount of money to be paid for goods and the payment method, the first system processor 10 ascertains whether or not the entered amount of money is within the value recorded in the limit amount column of the credit card. If not, then the first system processor 10 displays information indicative of rejection of sales on credit on the display unit 13. If the entered amount of money is within the value of the limit amount column, then the first system processor 10 prompts the person in charge to enter the password. If the entered password agrees with the password of the credit card, then the first system processor 10 allows the sales on credit. After the proceedings of this sales, the first system processor 10 subtracts the amount of money to be paid from the value recorded in the limit amount column, updates the value of the limit amount column, and returns the credit card.

If the date of use is after the date recorded in the management information column 3, then the first system processor 10 does not make any judgment by itself as to whether the proposed purchase with the credit card is permissible or not, but inquires the second system processor 20 whether the proposed purchase with the credit card is permissible or not notifying the identification numbers and the proposed amount of money. The inquiry may be made on-line through the communication adapters 15, 25 or off-line through the facsimile devices 31, 32 or telephone. If the registration of the member master file is completed at this time, the second system processor 20 seeks the member master file for the remaining amount of money available for purchase on credit, the history of past payments (payment delay information), invalid data, etc., checks whether the proposed amount of money is less than the present value of the limit amount column or not, and sends an answer to the first system. On the side of the first system, the person in charge allows or rejects the purchase with the credit card based on the answer. If the registration of the member master file is not yet completed at that time for some reason, the second system notifies the incomplete registration to the first system, which then determines by itself whether the purchase with the credit card is permissible or not as described above.

During the period before the member data is registered on the side of the second system, the credit card issued by the first system functions as a credit card usable within the limited amount of money (e.g., 300,000 yen) recorded in the limit amount column of the credit card. Insofar as the amount of money to be paid with the credit card is less than the value of the limit amount column, the customer can use the credit card repeatedly without any need for the application procedure or the credibility inquiry each time he buys goods. During a certain period prior to the data registration on the side of the second system, if the customer uses up all the limit amount of money, he can no longer buy goods with the credit card. Because the usable amount of money is limited, the customer is prevented from suffering debts to the excess of his limit or multiple debts for the reason of using the same credit card. If the limit amount of money is set to a relatively small value, then the credibility investigation is simplified, and a credit card can be issued immediately upon request.

Once the member data is registered on the side of the second system, the credit card functions as a regular credit card, which is not put in a restricted usage under the value in the limit amount column recorded on the credit card, but goes through the regular check based on the information of the second system. Consequently, the credit card issued immediately at the request of the customer can be used as a continuously usable credit card.

In the above embodiment, it is on the credit card where the management information and other information are recorded. According to another embodiment, it is not on the credit card but in the memory unit 14 where the date or term information with respect to the credit card issuance and the information about the limit amount of money are registered. This embodiment works in the same way as the above embodiment. Also in this case, the management information may be the date of issuance of the credit card or may be the limit amount of money assigned to the credit card.

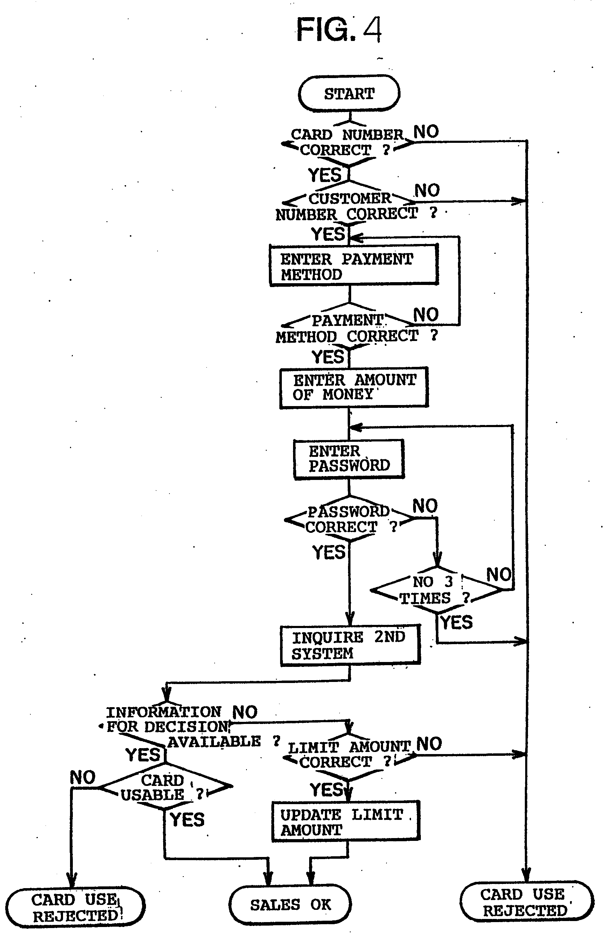

In another embodiment, the term management does not employed on the side of the first system. Instead, as shown in FIG.4, the first system inquires the second system about whether the use of the credit card is permissible or not each time the customer proposes a payment with the credit card. If the member master file is incomplete, the second system answers the incompleteness to the first system, which then determines whether the purchase with the credit card is permissible or not. If the member master file has been competed, the second system determines whether the purchase with the credit card is permissible or not, and answers the result to the first system. The way to determine whether the purchase with the credit card is permissible or not is not described here because it is the same as mentioned above.

According to yet still further embodiment of the present invention, the first system checks its own management information and/or the management information of the credit card each time the credit card is used. If the management information indicates that it is the first system that makes the decision whether the purchase with the credit card is permissible or not, the first system determines it by itself as described above. If the member master file becomes completed on the side of the second system and the second system is capable of managing the credit card, the second system notifies the first system of it. Based on the answer the first system modifies its management information to indicate that it is the second system that determines the usability of the credit card. Thereafter, the second system makes the decision about the usability of the credit card.

### Industrial usability

As described above, according to the present invention, although the first system that is located in the retail store may be of a small size, the credit card system allows the first system to issue a credit card immediately on site and also to sell goods on credit, and the credit card which is issued immediately on site by the credit card system can continuously be used like conventional credit cards.

## Claims

1. A credit card system comprising:
a communication means for communicating with a second system for determining whether the credit card can be used or not;
a reader means for reading at least identification information and management information recorded on the credit card;
a decision means for determining whether the credit card can be used or not;
a judgment means for judging whether usability of the credit card is to be determined by its own system or said second system based on the management information recorded on the credit card; and
a means for indicating or displaying resultant data as to whether the credit card can be used or not as determined by said decision means if said judgment means judges that usability of the credit card is to be determined by its own system; and for inquiring said second system about usability of the credit card through said communication means if said judgment means judges that usability of the credit card is to be determined by said second system, and indicating or displaying resultant data as to whether the credit card can be used or not as determined by said second system.

2. A credit card system according to claim 1, wherein said management information comprises term or date information recorded on the credit card.

3. A credit card system according to claim 1, wherein said management information comprises limit amount information recorded on the credit card.

4. A credit card system comprising:
a communication means for communicating with a second system for determining whether the credit card can be used or not;
a reader means for reading at least the identification information recorded on the credit card;
a memory means for storing management information of each credit card;
a decision means for determining whether the credit card can be used or not;
a judgment means for judging whether usability of the credit card is to be determined by its own system or said second system based on the management information stored in said memory means;
a means for indicating or displaying resultant data as to whether the credit card can be used or not as determined by said decision means if said judgment means judges that usability of the credit card is to be determined by its own system; and for inquiring said second system about usability of the credit card if said judgment means judges that usability of the credit card is to be determined by said second system, and indicating or displaying resultant data as to whether the credit card can be used or not as determined by said second system.

5. A credit card system according to claim 4, wherein said management information comprises term or date information recorded on the credit card.

6. A credit card system according to claim 4, wherein said management information comprises limit amount information recorded on the credit card.

7. A credit card system comprising:
a communication means for communicating with a second system which manages the information to determine whether the credit card can be used or not;
a reader means for reading at least the identification information recorded on the credit card;
a decision means for determining whether the credit card can be used or not;
an inquiry means for inquiring said second system about usability of the credit card;
a judgment means for judging whether usability of the credit card is to be determined by its own system or not based on the decision by said second system; and
a means for indicating or displaying resultant data as to whether the credit card can be used or not as determined by said decision means of its own system if said judgment means judges on the basis of the answer from said second system that usability of the credit card is to be determined by its own system after said inquiry means inquires said second system about usability of the credit card; and for indicating or displaying resultant data as to whether the credit card can be used or not as determined by said second system if said judgment means judges that usability of the credit card should not be determined by its own system.
based on the answer from another system after said inquiry means inquires said second system about usability of the credit card

8. A method of using a credit card with a credit card system, said credit card system comprising a first system for primarily managing justifiability of a credit card, a second system for primarily managing credit information of a customer, and a credit card having storage means for storing at least identification information and management information therein, said first system comprising communication means for communicating with said second system, reader means for reading the identification information and the management information stored in the storage means of the credit card, decision means for determining whether the credit card can be used or not, and judgment means for judging whether usability of the credit card is to be determined by said first system or not based on the management information stored in the storage means of the credit card, said method comprising the steps of:
indicating or displaying resultant data as to whether the credit card can be used or not as determined by said decision means if said judgment means judges that usability of the credit card is to be determined by said first system; and
inquiring said second system about usability of the credit card through said communication means if said judgment means judges that usability of the credit card is to be determined by said second system, and indicating or displaying resultant data as to whether the credit card can be used or not as determined by said second system.

9. A method of using a credit card with a credit card system, said credit card system comprising a first system for primarily managing justifiability of a credit card, a second system for primarily managing credit information of a customer, and a credit card having storage means for storing at least identification information therein, said first system comprising communication means for communicating with said second system, reader means for reading the identification information stored in the storage means of the credit card, memory means for storing management information of the credit card, decision means for determining whether the credit card can be used or not, and judgment means for judging whether usability of the credit card is to be determined by said first system or not based on the management information stored in the storage means of the credit card, said method comprising the steps of:
indicating or displaying resultant data as to whether the credit card can be used or not as determined by said decision means if said judgment means judges that usability of the credit card is to be determined by said first system; and
inquiring said second system about usability of the credit card if said judgment means judges that usability of the credit card is to be determined by said second system, and indicating or displaying resultant data as to whether the credit card can be used or not as determined by said second system.

10. A method of using a credit card with a credit card system comprising;
a communication means for communicating with a second system which manages the information to determine whether the credit card can be used or not, reader means for reading at least the identification information recorded on the credit card, decision means for determining whether the credit card can be used or not, inquiry means for inquiring said second system about usability of the credit card, and judgment means for judging whether usability of the credit card is to be determined by its own system or not based on the decision by said second system, said method comprising the steps of:
indicating or displaying resultant data as to whether the credit card can be used or not as determined by said decision means if said judgment means judges on the basis of the answer from said second system that usability of the credit card is to be determined by its own system after said inquiry means inquires said second system about usability of the credit card; and
indicating or displaying resultant data as to whether the credit card can be used or not as determined by said second system if said judgment means judges that usability of the credit card should not be determined by its own system.

11. A credit card system according to any one of claims 1 through 7, wherein said credit card and/or said self system has a limit amount column for recording a limit amount of money, further comprising means for updating the limit amount of money recorded in said limit amount column as the credit card is used, said decision means comprising means for determining whether the credit card can be used or not based on resultant data produced by comparison between the limit amount of money recorded in said limit amount column and an amount of money proposed to pay with the credit card.

12. A method according to any one of claims 8 through 10, wherein said credit card and/or said first system has a limit amount column for recording a limit amount of money, further comprising means for updating the limit amount of money recorded in said limit amount column as the credit card is used, said method further comprising the step of determining whether the credit card can be used or not based on resultant data produced by comparison between the limit amount of money recorded in said limit amount column and an amount of money proposed to pay with the credit card.
